Europäisches Patentamt

(19) **European Patent Office**

Office européen des brevets

(11) Numéro de publication: **0 120 750**
**B1**

(12) **FASCICULE DE BREVET EUROPÉEN**

(45) Date de publication du fascicule du brevet:
**05.11.86**

(51) Int. Cl.⁴: **B 01 D 35/22,** B 01 D 25/02, B 01 D 13/00

(21) Numéro de dépôt: **84400411.9**

(22) Date de dépôt: **01.03.84**

(54) Appareil de filtration tangentielle et installation comportant un tel appareil.

(30) Priorité: **24.03.83 FR 8304827**

(43) Date de publication de la demande:
**03.10.84 Bulletin 84/40**

(45) Mention de la délivrance du brevet:
**05.11.86 Bulletin 86/45**

(84) Etats contractants désignés:
**BE CH DE GB IT LI**

(56) Documents cité:
**DE-A-2 019 001**
**NL-A-7 515 262**
**US-A-3 754 658**
**US-A-4 347 136**

(73) Titulaire: **SOCIETE LYONNAISE DES EAUX ET DE L'ECLAIRAGE Société Anonyme, 45, rue Cortambert, F-75016 Paris (FR)**
Titulaire: **DEGREMONT S.A., 183, Avenue du 18 Juin 1940, F-92508 Rueil- Malmaison Cédex (FR)**
Titulaire: **INSTITUT DE LA FILTRATION ET DES TECHNIQUES SEPARATIVES, Foulayronnes, F-47000 Agen (FR)**

(72) Inventeur: **Ben Aim, Bigarrat, F-47390 Layrac (FR)**
Inventeur: **Bourdiol, Daniel, 4, rue Prosper Dauzon, F-47390 Layrac (FR)**
Inventeur: **Fiessinger, Francois, 1, rue Alphége Thomas, F-92370 Chaville (FR)**
Inventeur: **Rovel, Jean- marie, 74, rue Sophie Rodrigues, F-92500 Rueil Malmaison (FR)**

(74) Mandataire: **Armengaud, Charles, Cabinet ARMENGAUD AINE 3, Avenue Bugeaud, F-75116 Paris (FR)**

EP 0 120 750 B1

LIBER, STOCKHOLM 1986

## Description

La présente invention concerne un appareil de filtration tangentielle applicable à la filtration de fines particules en suspension dans des liquides, en particulier dans des installations de traitement des eaux, dans l'industrie agro-alimentaire et dans les bio-industries, par exemple pour la production d'eau très pure, pour la désinfection d'eaux industrielles ou résiduaires, pour la stérilisation d'eau potable, de jus de fruits ou liquides alimentaires, pour la séparation de biomasse cellulaire; et plus généralement pour toute décontamination poussée de liquides et tout traitement effectué sur membrane microporeuse d'ultrafiltration ou de microfiltration.

Le principe de la filtration tangentielle est bien connu: il consiste à créer un déplacement relatif à grande vitesse de la suspension à filtrer et du matériau filtrant poreux de façon à éviter ou à limiter la formation de dépôt sur ce matériau filtrant. Cette technique permet la filtration de fines particules en suspension de 0,1 à quelques dizaines de microns en microfiltration et même de macro-molécules de poids moléculaire supérieur à 10.000 par exemple, en ultrafiltration, pour lesquelles les procédés classiques de filtration par percolation conduisent à des débits de filtrat très faibles, suite à un colmatage rapide du matériau filtrant ou à la constitution d'un dépôt d'épaisseur croissante.

La technique de filtration tangentielle permet une vitesse de filtration élevée et une opération continue ou semi-continue; en outre, elle permet de définir parfaitement le degré de filtration désiré en fonction des caractéristiques géométriques du matériau filtrant utilisé.

Plusieurs types d'éléments filtrants ont déjà été décrits, qui permettent de réaliser une telle filtration tangentielle, Le plus ancien appareil connu décrit par le brevet U.S.S.R. n° 142. 626 de Zhevnovatyi A. I. en 1961 est constitué par un tube de matériau poreux fixé à l'intérieur d'un second tube, la suspension à filtrer passant sous pression à un débit rapide dans l'espace annulaire entre les deux tubes, le filtrat s'écoulant à l'intérieur du tube poreux.

Depuis lors, les matériaux filtrants utilisés ont été perfectionnés ainsi que l'écoulement du liquide à filtrer. Ainsi, certains appareils connus utilisent deux cylindres concentriques dont le cylindre intérieur est constitué d'une membrane microporeuse, le liquide étant soumis à un écoulement forcé hélicoïdal autour de ce cylindre intérieur.

D'autres appareils comportent une série d'éléments filtrants superposés en forme de plateaux ou de disques, munis sur leurs deux faces de membranes microporeuses, disposés par exemple autour d'un tube collecteur du filtrat, la suspension à filtrer passant successivement entre les disques suivant un trajet hélicoïdal.

Il existe également des appareils à plateaux tournants d'une grande complexité mécanique pouvant donner lieu à des phénomènes de corrosion.

La principale difficulté rencontrée reste cependant la maîtrise de l'écoulement du liquide à filtrer, sa répartition sur les plateaux et les disques, la limitation, due aux pertes de charge, de la grande vitesse de circulation nécessaire.

En outre, le caractère modulaire intéressant pour l'adaptation du matériel au problème à traiter et pour l'accès plus facile au matériau poreux est généralement obtenu au détriment d'une bonne répartition de l'écoulement.

Enfin on connait par NL-A-7 515 262 un appareil à filtration tangentielle comportant disposé dans une enceinte en forme de corps de révolution un élément de filtration consistant en un coduit formant rampe hélicoïdale pour le liquide à traiter, le filtrat s'écoulant à l'intériur du conduit d'où il est evacué vers l'extérieur de l'appareil.

La présente invention permet, dans un appareil modulaire facilement lavable et démontable, un écoulement hélicoïdal du liquide à filtrer, la plus grande partie du volume de l'appareil étant réservée à l'écoulement, de façon à minimiser les pertes de charge, susceptibles de réduire la vitesse d'écoulement dudit liquide.

L'invention consiste en un appareil de filtration comprenant au moins un module de filtration tangentielle, comportant, disposé dans une enceinte en forme de corps de révolution, au moins un élément de filtration consistant en un conduit formant rampe hélicoïdale pour le liquide à traiter, le filtrat s'écoulant à l'intérieur du conduit d'où il est évacué à l'extérieur du module, caractérisé en ce que chaque module comporte au moins deux éléments de filtration disposés chacun dans l'enceinte suivant deux hélices concentriques, de pas opposé.

Les divers caractéristiques et avantages de l'invention ressortiront de la description qui va suivre, de quelques unes de ses formes possibles de réalisation, données d'ailleurs uniquement à titre d'exemples non limitatifs.

Au cours de cette description, on se réfère aux dessins ci-joints sur lesquels:

la Fig. 1 est une vue en perspective d'un module de filtration suivant l'invention,

la Fig. 2 est une vue schématique d'un appareil de filtration constitué de six modules,

les Fig. 3 à 5 représentent schématiquement quelques formes de réalisation d'installations suivant l'invention.

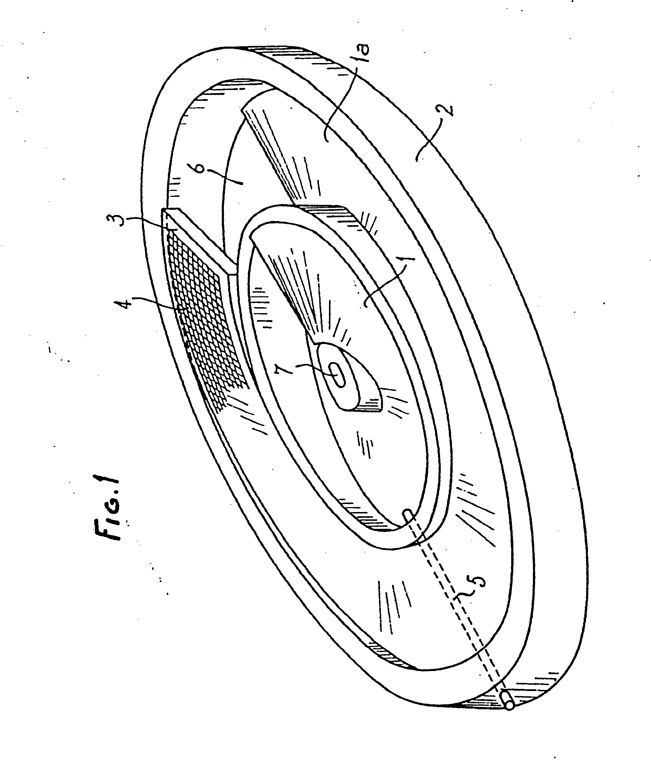

Dans l'exemple traité à la Fig. 1, le module de filtration suivant l'invention comporte deux éléments filtrants 1, 1a, se présentant sous la forme de conduits de section rectangulaire - dans l'exemple décrit, mais pouvant être aussi bien trapézoïdale - et disposés, suivant deux hélices, concentriques et de pas opposé, dans une enceinte cylindrique 2, en toute matière quelconque convenable. L'enceinte peut d'allieurs avoir une autre forme, plus ou moin s voisine, par exemple être conique.

Chaque élément filtrant hélicoïdal est fait d'un matériau filtrant, qui constitue ses parois en contact avec le liquide à filtrer et qui peut être avantageusement un tissu métallique, un tissu en une fibre textile quelconque convenable, un feutre, un non-tissé, un corps fritté, une membrane poreuse obtenue à partir de matériaux naturels ou synthétiques, etc... disposé sur les deux faces d'un support hélicoïdal.

Avantageusement, chaque élément hélicoïdal ne règne pas sur la totalité de la circonférence, mais est limité à un secteur inférieur à 360°. On verra plus loin l'intérêt d'une telle disposition.

Chaque élément filtrant hélicoïdal est rendu solidaire de l'enceinte 2 par tout moyen quelconque convenable, tel que collage, sertissage, soudage, etc...

La surface 3, tunt supérieure qu'inférieure de chaque élément est munie de rainures 4, amenant le filtrat en vue de sa collecte à une tubulure 5, débouchant à l'extérieur du module, pour l'évacuation du filtrat.

Le liquide à filtrer est, dans l'exemple représenté à la Fig. 1, introduit dans l'enceinte 2 par l'espace 6. Il s'écoule, tangentiellement, dans l'enceinte, sur l'élément filtrant 1 qui joue ainsi le rôle d'une rampe hélicoïdale pour le liquide, en vue d'assurer sa filtration tangentielle. Après être passé sur l'élément filtrant 1, le liquide est repris, dans le sens opposé, par l'élément hélicoïdal 1a, jouant également le rôle de rampe de guidage pour le liquide à filtrer, dont la partie non filtrée s'écoule par l'orifice 7. Bien entendu, le module est fermé à ses deux extrémités: à sa partie inférieure par un fond (non représenté) dans lequel arrive le liquide à filtrer et à sa partie supérieure par un couvercle (également non représenté).

Ainsi est réalisé, grâce à l'invention, un écoulement sans obstacle du liquide à filtrer, dirigé hélicoïdalement, de façon à effectuer la filtration tangentielle de ce liquide, sans pratiquement de perte de charge susceptible d'influer de façon fâcheuse sur l'énergie nécessaire à la circulation du liquide dans le module. En outre, ce module est de conception telle qu'elle permet sa fabrication par moulage et, en utilisation, un lavage aisé du module.

Cette conception modulaire permet d'ailleurs la réalisation d'appareil de filtration, tel que celui représenté, à titre d'exemple, à la Fig. 2. Dans cet exemple de réalisation, l'appareil est constitué par la superposition de mêmes modules tels que celui décrit ci-dessus et représenté à la Fig. 1, fixés les uns aux autres par tout moyen mécanique quelconque permettant leur montage et leur démontage faciles, donc leur interchangeabilité, et fermé par un fond 8 et un couvercle 9. L'appareil est alimenté en liquide à filtrer par la canalisation 10. Ce liquide circule successivement le long des éléments filtrants hélicoïdaux 1, puis 1a de chaque module, le couvercle 9 assurant le passage d'une hélice à l'autre, avant d'être évacué par l'orifice 11. Le filtrat issu des éléments filtrants de chaque module est évacué de chaque module par un orifice 12. Comme on l'a vu plus haut chaque élément filtrant hélicoïdal est avantageusement limité à un secteur inférieur à 360°. Dans la réalisation de l'appareil suivant la Fig. 2 les éléments sont montés de telle sorte que les orifices 12 de sortie du filtrat se trouvent ainsi décalés entre eux, bien qu'en même temps est assurée la continuité du trajet du liquide à filtrer sur les parois extérieures du conduit formé par les éléments hélicoïdaux, parois constituant de ce fait une surface hélicoïdale continue. Cette disposition permet de récupérer indépendamment le filtrat issu de chaque module avec possibilité de mettre un module hors service sans affecter la bonne marche de l'appareil, par simple obturation du conduit d'évacuation. Ainsi, par exemple, si l'hélice est limitée à 330° l'appareil constitué de 12 modules identiques formant au moins une hélice de 11 pas, comportera au moins 12 sorties de filtrat différentes correspondant à des modules différents.

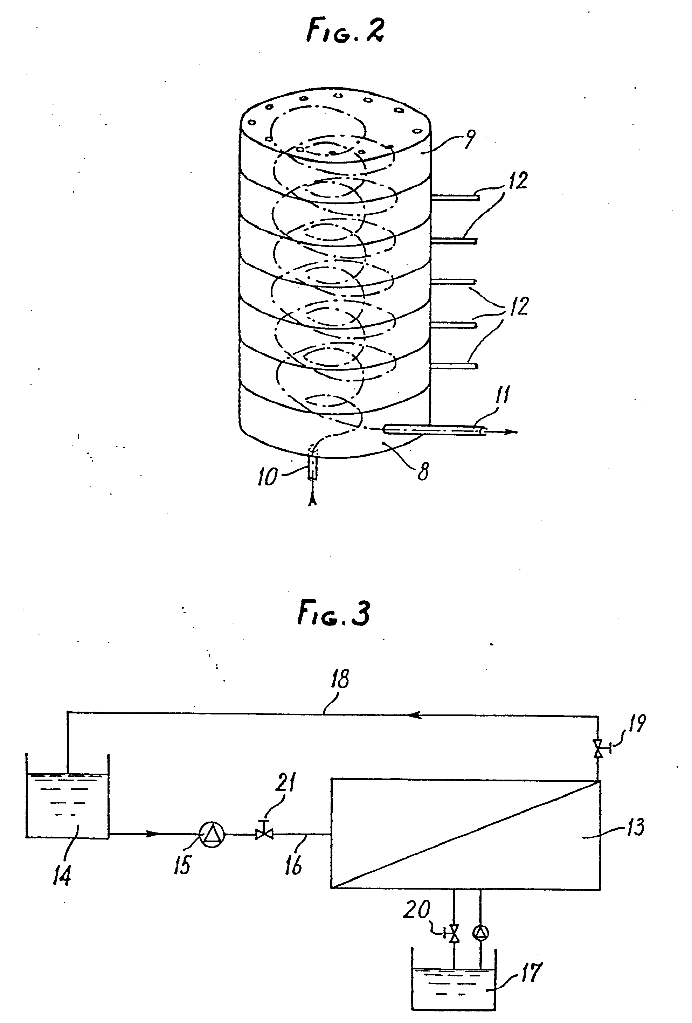

La Fig. 3 montre, à titre d'exemple, une installation comportant un appareil de filtration, du type de celui qui vient d'être décrit en relation avec la Fig. 2. Cet appareil, représenté schématiquement en 13 est alimenté en liquide à filtrer provenant d'un bac 14 par une pompe 15 prévue sur la canalisation 16. Le filtrat est recueilli en 17. L'appareil 13 est relié au bac 14 par une canalisation 18, sur laquelle est disposée une vanne 19, pour le recyclage du liquide non filtré dans le bac 14. La pompe 15 assure l'alimentation de l'appareil 13 en liquide à filtrer, le recyclage du liquide restant et également le lavage de l'appareil au moyen du filtrat, par ouverture ou fermeture des vannes 15, 19, 20 et 21.

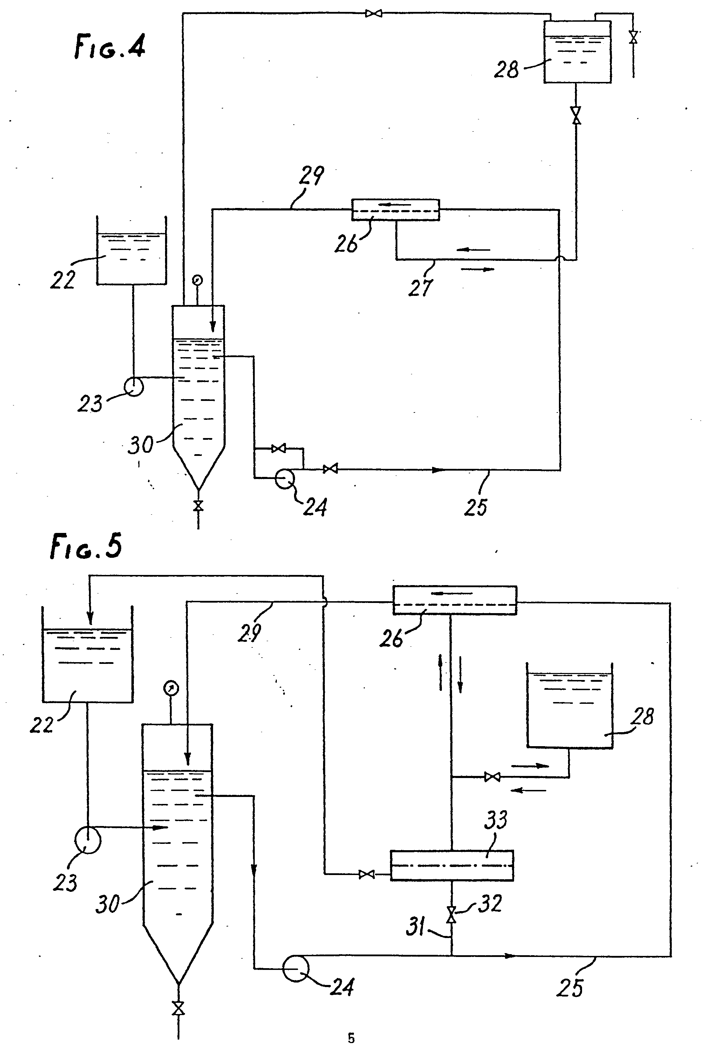

Dans l'exemple de réalisation représenté à la Fig. 4, le liquide à filtrer contenu dans un bac 22 est, par une pompe 23, introduit dans un bac conçu, aménagé (décanteur par exemple) ou muni de moyens (cyclone par exemple) de façon à séparer les solides éventuellement présents dans le liquide, lequel est refoulé par une pompe 24, prévue sur la canalisation 25 dans l'appareil de filtration 26 suivant l'invention. De cet appareil le filtrat est amené, par une canalisation 27, à un récipient 28 en charge par rapport à l'appareil et à une hauteur suffisante pour permettre le lavage de l'appareil par refoulement gravitaire du filtrat dans l'appareil. Une canalisation 29 relie l'appareil 26 au bac intermédiaire 30 pour le recyclage du liquide restant vers l'appareil 26.

La Fig. 5 montre une variante de l'installation qui vient d'être décrite. Dans cette variante, une membrane souple, non poreuse, est intercalée sur le circuit, moyennant une canalisation 31, avec vanne 32, branchée sur la canalisation 25 d'amenée du liquide à filtrer à l'appareil de filtration 26. Quant au récipient 28 de recueil du filtrat et à l'appareil de filtration 26, leur position réciproque est inversée, l'appareil de filtration. étant en charge par rapport au récipient 28. La membrane 33 permet, pendant la séquence de lavage, le refoulement du filtrat, de façon périodique et à débit pulsé, dans l'appareil de lavage.

On a donné ci-après un premier exemple de traitement d'eau de mer à l'aide d'une installation suivant l'invention.

On a traité l'eau de mer dans une installation comportant 10 modules de filtration tangentielle suivant l'invention, ces modules de diamètre 40 cm à double hélice, étant disposés en série.

Le matériau filtrant était constitué par une toile en matière plastique comportant des mailles d'ouverture de 2 µm environ.

L'eau de mer brute contenait 5 ppm de matières en suspension et des particules fines à raison 16. 000/ml de particules supérieures à 5µm et de 50. 000/ml de particules supérieures à 2 µm

L'eau de mer était pompée pendant une heure avec un débit de 5 m³/h et un arrêt de 30 secondes toutes les 30 minutes. On a recueilli le filtrat dans un réservoir disposé à une hauteur de 3 m au-dessus de l'appareil avec un débit de 3 m³/h.

A la sortie de l'appareil les matières en suspension dans l'eau traitée n'étaient pas mesurables; les particules supérieures à 5 µm étaient éliminées à plus de 99 % (< 50ml); les particules supérieures à 2µm étaient éliminées à environ 95 % (environ 2500 ml).

Après 15 jours de fonctionnement, le débit était réduit à 2,5 m³/h; un décolmatage associant un lavage avec un produit tensio-actif et un retour par gravité du filtrat sur les modules a permis de restaurer le débit initial. L'eau de mer traitée a servi de fluide de réinjection.

On a donné ci-après un second exemple de traitement de lait à l'aide d'une installation suivant l'invention, comportant 10 modules de filtration tangentielle de diamètre 40 cm, à double hélice, disposés en série. Le matériau filtrant était constitaé par un matériau micro-poreux comportant des pores de diamètre 1, 2µm. Le lait à traiter contenait environ 2,3 % de protéines et 1,9 % de graisses.

L'appareil etait alimenté à un débit moyen de 5 m³/h avec décolmatage périodique.

On a recueilli le filtrat sous un débit moyen de 0,2 m³/h.

Ce filtrat ne contenait pratiquement plus de graisses. 50 % des protéines avaient également été retenues sur le filtre.

Le traitement du lait à l'aide d'une installation suivant l'invention s'avère nettement plus efficace que le traitement par centrifugation.

## Revendications

1. Appareil de filtration comprenant au moins un module de filtration tangentielle comportant, disposé dans une enceinte en forme de corps de révolution, au moins un élément de filtration consistant en un conduit (1) formant rampe hélicoïdale pour le liquide à traiter, le filtrat s'écoulant à l'intérieur du conduit d'où il est évacué à l'extérieur du module, caractérisé en ce que chaque module comporte au moins deux éléments de filtration (1, 1a) disposés chacun dans l'enceinte suivant deux hélices concentriques, de pas opposé.

2. Appareil de filtration tangentielle suivant l'une quelconque des revendications précédentes, caractérisé en ce que chaque élément filtrant hélicoïdal est limité à un secteur inférieur à 360°.

3. Appareil de filtration tangentielle suivant l'une quelconque des revendications précédentes, caractérisé en ce qu'il est constitué par une pluralité de modules assémblés, par tout moyen quelconque convenable, de façon à être décalés entre eux tout en assurant la continuité du trajet hélicoïdal du liquide à filtrer et en permettant une récupération séparée du filtrat issu de chaque élément.

4. Appareil de filtration tangentielle suivant l'une quelconque des revendications précédentes, caractérisé en ce que les éléments filtrants hélicoïdaux formant conduits pour le filtrat sont de section rectangulaire ou trapézoïdale.

5. Installation de filtration caractérisée en ce qu'elle comporte un appareil de filtration tangentielle suivant l'une quelconque des revendications précédentes, au moins un dispositif de pompage pour l'alimentation de cet appareil en liquide à filtrer, la circulation du liquide dans l'appareil et le lavage des éléments de filtration et un réservoir recevant le filtrat de l'appareil de filtration.

6. Installation suivant la revendication 5, caractérisé en ce que le(s) dispositif(s) de pompage assure(nt) dans l'appareil de filtration un débit pulsé.

7. Installation suivant l'une quelconque des revendications 5 et 6, caractérisée en ce que le réservoir recevant le filtrat est en charge par rapport à l'appareil de filtration, à une hauteur telle que le décolmatage du matériau filtrant puisse être effectué à contre-courant par refoulement du filtrat dans l'appareil.

8. Installation suivant l'une quelconque des revendications 5 à 7, caractérisée en ce qu'elle comporte une membrane souple non poreuse prévue entre le dispositif de pompage et l'appareil de filtration et reliée alternativement au réservoir de filtrat et au réservoir de liquide d'alimentation, de façon à réaliser le décolmatage à contre-courant du matériau filtrant par refoulement périodique du filtrat dans l'appareil de filtration.

## Patentansprüche

1. Filtrationsgerät mit mindestens einem Filtermodul zur tangentialen Filtration, das in einem rotationssymmetrischen Gehäuse zumindest ein Filterelement angeordnet enthält, das als Kanal (1) ausgebildet ist, der eine schraubenförmige Leitfläche für die zu behandelnde Flüssigkeit bildet, wobei das Filtrat in das Innere des Kanals läuft, won wo es aus dem Modul entfernt wird, dadurch gekennzeichnet, daß jedes Modul mindestens zwei Filterelemente (1, 1a) enthält, die in dem Gehäuse in Form von zwei konzentrischen Schraubengängen mit entgegengesetztem Gang angeordnet sind.

2. Tangentialfiltrationsgerät nach Anspruch 1, dadurch gekennzeichnet, daß jedes schraubenförmige Filterelement auf einen Sektor von weniger als 360° begrenzt ist.

3. Tangentialfiltrationsgerät nach einem der vorstehenden Ansprüche, dadurch gekennzeichnet, daß es aus mehreren Modulen besteht, die in jeder geeigneten Weise so zusammengebaut sein können, daß sie untereinander so versetzt sind, daß eine Kontinuität der schraubenförmigen Bahn der zu filtrierenden Flüssigkeit sichergestellt ist und das Filtrat aus jedem Modul getrennt aufgefangen werden kann.

4. Tangentialfiltrationsgerät nach einem der vorstehenden Ansprüche, dadurch gekennzeichnet, daß die schraubenförmigen Filterelemente, die auch die Kanäle für das Filtrat bilden, einen rechteckigen oder trapezförmigen Querschnitt aufweisen.

5. Filtrationsanlage, dadurch gekennzeichnet, daß sie ein Tangentialfiltrationsgerät nach einem der vorstehenden Patentansprüche enthält, sowie mindestens eine Fördereinrichtung zur Speisung des Filtrationsgerätes, zum Umwälzen der Flüssigkeit im Filtrationsgerät und zum Rückspülen der Filterelemente, und einen Sammelbehälter zur Aufnahme des aus dem Filtrationsgerät austretenden Filtrats.

6. Anlage nach Anspruch 5, dadurch gekennzeichnet, daß die Fördervorrichtung(en) im Filtrationsgerät einen pulsierenden Strom aufrechterhält.

7. Anlage nach einem der Ansprüche 5 oder 6, dadurch gekennzeichnet, daß der Filtratsammelbehälter beim Beladen um so viel höher als das Filtrationsgerät angeordnet ist, daß die Filterelemente durch einen Rücklauf des Filtrats in das Filtrationsgerät im Gegenstrom rückspülbar sind.

8. Anlage nach einem der Ansprüche 5 bis 7, dadurch gekennzeichnet, daß sie eine geschmeidige, nicht poröse Membran zwischen der Fördervorrichtung und dem Filtrationsgerät enthält, die wechselweise mit dem Filtratsammelbehälter und mit einem Zulaufbehälter verbunden ist, um die Rückspülung der Filterelemente im Gegenstrom durch periodischen Rücklauf von Filtrat in das Filtrationsgerät zu bewirken.

**Claims**

1. A filtration device comprising at least one tangential filtration module having, arranged in a housing in the form of a body of revolution, at least one filtration element consisting of a channel (1) forming a helical incline for the liquid to be treated, the filtrate flowing inside the channel whence it is drained off to the outside of the module, characterized in that each module comprises at least two filtration elements (1, 1a) each arranged in the housing along two concentric helices with opposite pitches.

2. A tangential filtration device according to any one of the preceding claims, characterized in that each helical filtration element is limited to a sector of less than 360°.

3. A tangential filtration device according to any one of the preceding claims, characterized in that it consists of a plurality of modules assembled, by any suitable method, in, such a way that they are out of alignment with each other whilst ensuring the continuity of the helical path of the liquid to be filtered and allowing the separate recovery of the filtrate derived from each element.

4. A tangential filtration device according to any one of the preceding claims, characterized in that the helical filtering elements which form channels for the filtrate are of rectangular or trapezoid cross section.

5. A filtration installation characterized in that it comprises a tangential filtration device according to any one of the preceding claims, at least one pumping apparatus for feeding this device with liquid to be filtered, circulating the liquid in the device and cleaning the filtration elements and a reservoir to receive the filtrate from the filtration device.

6. An installation according to claim 5, characterized in that. the pumping apparatus(es) ensure(s) a pulsating flow in the filtration device.

7. An installation according to any one of claims 5 and 6, characterized in that the reservoir receiving the filtrate is under pressure in relation to the filtration device, at a height such that the cleaning of the filtering material may be effected countercurrently by forcing the filtrate back into the device.

8. An installation according to any one of claims 5 to 7, characterized in that it comprises a flexible, non-porous membrane provided between the pumping apparatus and the filtration device and connected alternately to the filtrate reservoir and the feed liquid reservoir, in such a way as to clean the filtering material countercurrently by periodically forcing the filtrate back into the filtration device.

Fig.1

0 120 750

## Fig. 2

## Fig. 3

**Fig.4**

**Fig.5**